# EUROPEAN PATENT APPLICATION

(11) **EP 4 621 350 A1**
(43) Date of publication of application: **24.09.2025**
(21) Application number: 23891427.9
(22) Date of filing: 07.11.2023
(51) Int. Cl.: G01B 15/02, G01B 21/08, G01G 9/00

(54) **MEASURING DEVICE**

(30) Priority: 18.11.2022 JP 2022185172
(71) Applicant: Yokogawa Electric Corporation, Tokyo 180-8750 (JP)
(72) Inventor: ICHIZAWA Yasushi, Musashino-shi, Tokyo 180-8750 (JP); TERAJIMA Minoru, Musashino-shi, Tokyo 180-8750 (JP)
(74) Representative: Zimmermann, Tankred Klaus
(86) International application number: PCT/JP2023/040096
(87) International publication number: WO 2024/106275

(57) **Abstract**

A measurement apparatus (1) according to the present disclosure is for measuring a parameter of a sheet-like object (S) and includes a pair of sensor heads (20) configured to move horizontally while separated from and facing each other and to scan the object (S) with the object (S) positioned between the sensor heads (20), a support (10) configured to support the pair of sensor heads (20) in a horizontally movable manner, and an electrical component unit (30) configured to control measurement of the parameter using the sensor heads (20). The arrangement of the electrical component unit (30) can be changed between a first position (P1) on one side of the support (10) and a second position (P2) on another side of the support (10) according to an installation location of the measurement apparatus (1).

## Description

### CROSS-REFERENCE TO RELATED APPLICATION

The present application claims priority to Japanese Patent Application No. 2022-185172 filed on November 18, 2022, the entire contents of which are incorporated herein by reference.

### TECHNICAL FIELD

The present disclosure relates to a measurement apparatus.

### BACKGROUND

Technology related to measurement apparatuses for measuring the basis weight and the like of sheet-like objects is known. For example, Patent Literature (PTL) 1 discloses an O-shaped frame provided with a pair of beams that supports a sensor head in a horizontally movable manner and a measurement apparatus provided with the O-shaped frame. Beams with satisfactory shape accuracy and rigidity can easily be obtained for the measurement apparatus at low cost. The measurement apparatus is, as an example, an online thickness gauge.

### CITATION LIST

### Patent Literature

PTL 1: JP 2018-124104 A

### SUMMARY

### (Technical Problem)

Conventional measurement apparatuses have to be manufactured with clearly defined specifications for each installation location in a production line for the production of sheet-like objects. This has caused various problems related to the manufacturing of measurement apparatuses, such as the inability to start manufacturing measurement apparatuses until the specifications are clearly defined, short delivery times for measurement apparatuses once the specifications are clearly defined, and low manufacturing efficiency of measurement apparatuses due to large fluctuations in the manufacturing load.

It is an aim of the present disclosure to provide a measurement apparatus that can be easily manufactured by reducing the dependence on the specifications of each installation location of the measurement apparatus.

### (Solution to Problem)

A measurement apparatus according to several embodiments is a measurement apparatus for measuring a parameter of a sheet-like object, the measurement apparatus including a pair of sensor heads configured to move horizontally while separated from and facing each other and to scan the object with the object positioned between the sensor heads, a support configured to support the pair of sensor heads in a horizontally movable manner, and an electrical component unit configured to control measurement of the parameter using the sensor heads, wherein an arrangement of the electrical component unit can be changed between a first position on one side of the support and a second position on another side of the support according to an installation location of the measurement apparatus.

The measurement apparatus can thereby easily be manufactured by reducing the dependence on the specifications of each installation location of the measurement apparatus. The arrangement of the electrical component unit can be changed between the first position and the second position according to the installation location of the measurement apparatus, thus making it possible always to manufacture the same model of measurement apparatus during manufacturing of the measurement apparatus. The same model of measurement apparatus can be manufactured and shipped, and the appropriate position between the first position and the second position can be selected and the electrical component unit arranged according to the installation location at the production plant where the object is produced.

In a measurement apparatus according to an embodiment, the electrical component unit may include a mounting structure configured to attach the electrical component unit to the support at the first position or the second position. This enables the electrical component unit to be stably and easily secured to the support at the first position or the second position.

In the measurement apparatus according to an embodiment, the support may include a first evacuation area in which the object is not present on the first position side of the support and a second evacuation area in which the object is not present on the second position side of the support. This enables symmetrical formation of the constituent elements of the measurement apparatus, including the support and the pair of sensor heads. As described above, it is thereby possible always to manufacture the same model of measurement apparatus during manufacturing of the measurement apparatus, without having to consider whether the positions are reversed, and to operate the measurement apparatus symmetrically according to the installation location of the production line.

In a measurement apparatus according to an embodiment, the pair of sensor heads may use the first evacuation area as an origin area when the electrical component unit is at the first position and use the second evacuation area as the origin area when the electrical component unit is at the second position. This makes it easy to set the origin area of the pair of sensor heads and the electrical component unit together on the back side, which is the equipment maintenance side, in accordance with conventional practice.

A measurement apparatus according to an embodiment may further include a pair of switches mounted on the support respectively on the first position side and the second position side of the support and configured to switch between a function of defining an origin of the sensor head and a function of restricting movement of the sensor head according to the arrangement of the electrical component unit. As described above, this makes it possible always to manufacture the same model of measurement apparatus during manufacturing of the measurement apparatus, without having to consider whether the positions are reversed, and to operate the measurement apparatus symmetrically according to the installation location of the production line.

A measurement apparatus according to an embodiment may further include a cable connecting the pair of sensor heads and the electrical component unit to each other, at least a portion of the cable being arranged outside of the support. The cable can thereby be appropriately routed along the support in response to movement of the electrical component unit from one of the first position and the second position to the other.

In the measurement apparatus according to an embodiment, the support may be an O-shaped frame including a pair of beams respectively supporting the pair of sensor heads, a first stand connecting ends of the pair of beams on one side, and a second stand connecting ends of the pair of beams on another side. This improves the robustness of the support.

In a measurement apparatus according to an embodiment, the first position may be a position on one side of the O-shaped frame in a longitudinal direction, and the second position may be a position on another side of the O-shaped frame in the longitudinal direction. This enables the electrical component unit and the evacuation area of the pair of sensor heads to be arranged in a direction orthogonal to the conveyance direction of the object, in accordance with conventional practice.

In a measurement apparatus according to an embodiment, the object may include a battery electrode sheet. This enables the measurement apparatus to measure a parameter on a production line for producing battery electrode sheets, with a battery electrode sheet as the object of measurement.

In a measurement apparatus according to an embodiment, the parameter may include a basis weight of the object. The measurement apparatus can thereby measure the basis weight of the sheet-like object on a production line for producing the sheet-like object.

### (Advantageous Effect)

According to the present disclosure, a measurement apparatus that can be easily manufactured by reducing the dependence on the specifications of each installation location of the measurement apparatus can be provided.

### BRIEF DESCRIPTION OF THE DRAWINGS

In the accompanying drawings:
FIG. 1 is a schematic diagram illustrating a schematic configuration of a measurement apparatus according to an embodiment of the present disclosure;
FIG. 2 is a schematic diagram of the measurement apparatus in FIG. 1, viewed from the direction in which the object is conveyed; and
FIG. 3 is a schematic diagram illustrating an example layout of a battery electrode sheet coating line.

### DETAILED DESCRIPTION

The background and problems with conventional technology are described in greater detail.

Technology related to an online thickness gauge that uses radiation such as beta rays and X-rays to measure the basis weight of battery electrode sheets, which are produced by thinly applying and drying a mixture of active material and the like on a metal foil, is known. In the production process of battery electrode sheets, each of the positive and negative electrodes is formed on different production lines from each other. For example, the positive electrode is formed by applying a thin, uniform coating of slurry to the surface of aluminum foil, drying in the next process, and after drying, applying the same coating to the back side of the aluminum foil and drying in the next process.

Inspection in the coating and drying processes may include measurement of the coating weight, i.e., the coating basis weight, measurement of the shape of the coating end face, i.e., the edge, and image diagnosis of the dried surface condition. Measurement of the coating basis weight using an online thickness gauge is mainly described below.

For example, as illustrated in PTL 1, an upper sensor head and a lower sensor head are respectively anchored to an upper beam and a lower beam of an O-shaped frame constituting an online thickness gauge. The upper sensor head and the lower sensor head scan the battery electrode sheet as an object while moving horizontally left and right in the O-shaped frame in synchronization with each other. One of the upper sensor head and the lower sensor head has a radiation source that emits radiation such as beta rays and X-rays. The other has a detector that detects the radiation emitted from the radiation source and transmitted through the battery electrode sheet. The radiation source and the detector face each other during scanning of the battery electrode sheet.

The online thickness gauge uses a pair of sensor heads, including an upper sensor head and a lower sensor head, to measure the transmission attenuation of radiation by the battery electrode sheet, which is the object. The online thickness gauge performs similar measurements on a plurality of samples of known basis weight in advance and calculates a calibration curve. The online thickness gauge can calculate the basis weight of the object based on the relationship between the transmission attenuation and the pre-calculated calibration curve.

Online thickness gauges can be broadly divided into two types, i.e., those with an integrated electrical component unit and those with a separate electrical component unit. The electrical component unit includes a transformer, a power supply, a control device, and the like and controls measurement of the basis weight using the pair of sensor heads. The type with an integrated electrical component unit has the electrical component unit built into the O-shaped frame. In the type with a separate electrical component unit, the electrical component unit is not built into the O-shaped frame but rather is housed in a separate console, and the pair of sensor heads and the electrical component unit are connected to each other by cables.

In both types, an evacuation area for the sensor heads is provided outside of the sheet-like object in the width direction. In the evacuation area, automatic periodic calibration of the sensor heads is performed in the absence of the object, and maintenance is performed during idle periods. Conventional online thickness gauges have an asymmetric footprint with respect to the object.

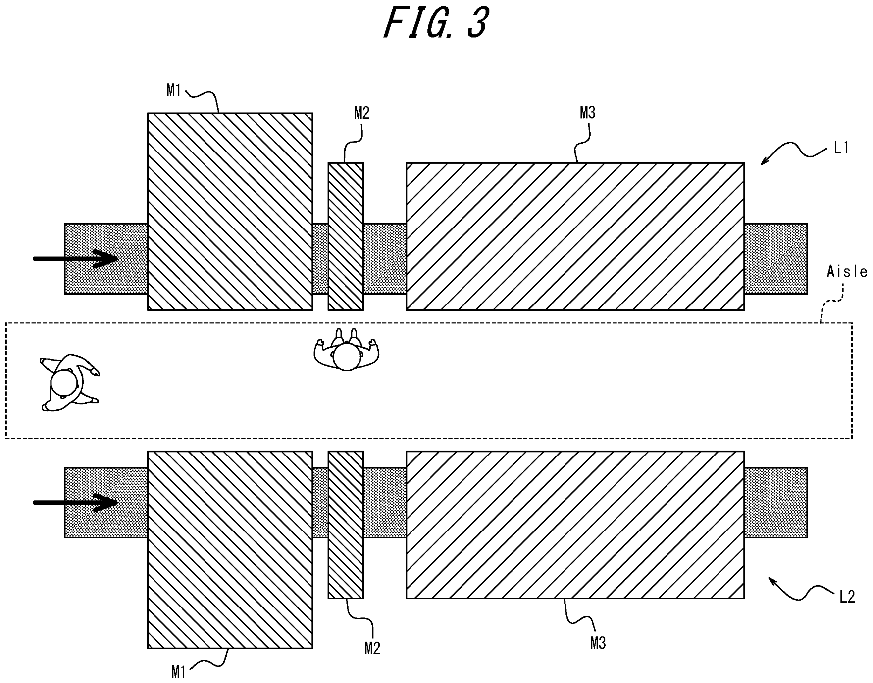

FIG. 3 is a schematic diagram illustrating an example layout of a battery electrode sheet coating line. A plurality of similar production lines may be installed in parallel in a battery electrode sheet production plant. For example, operators, i.e., workers, need to manage and operate a plurality of production lines L1 and L2 simultaneously. It is common for a worker to manage two production lines L1 and L2 on either side of an aisle.

The operating end of each apparatus, including the online thickness gauge, faces the aisle. Each apparatus is installed with its operating face, i.e., the front of the apparatus, aligned with the aisle. The battery electrode sheet passes through the interior of each apparatus. For example, the battery electrode sheet passes through an apparatus M1, an online thickness gauge M2, and an apparatus M3, in this order. Each apparatus differs in size, but each apparatus is designed so that the space on the operating end side in each apparatus is narrower, and so that the electrical component unit, which requires more space, is arranged on the opposite side from the operating end. Maintenance and the like on each apparatus is performed by accessing each apparatus from a separate work aisle located on the opposite side from the aisle.

As described above, apparatuses on production lines, including online thickness gauges, are designed and manufactured with the operation side as the front side and the apparatus maintenance side as the back side. Therefore, it is common for some apparatuses to have reversed positions, i.e., different specifications depending on their installation location on the production line. For example, such reversed positions occur between the online thickness gauge M2 installed on one production line L1 in and the online thickness gauge M2 installed on the other production line L2, which is located across the aisle, in FIG. 3.

Therefore, when a manufacturing order for each apparatus is received, it has been necessary to clarify the specifications for each installation location in the production line before starting the manufacturing of the apparatus. This causes the following various problems related to the manufacture of measurement apparatuses such as online thickness gauges.

For example, manufacturing of the measurement apparatus cannot begin until the specifications are clearly defined. If it takes time to determine the specifications, the delivery time for the measurement apparatus after the specifications are clearly defined is expected to be shortened. It is difficult to manufacture a measurement apparatus and hold the measurement apparatus in inventory before the specifications are clearly defined, and the manufacturing load fluctuates greatly before and after the specifications are clearly defined. As a result, the manufacturing efficiency of the measurement apparatus decreases.

In addition, if the specifications differ for each installation location, a large number of components with reversed positions are required for each specification, and the assembly method also differs, thereby reducing the work efficiency during assembly. Sudden changes or the like in the installation specifications of a measurement apparatus in a production line for producing an object require measures such as improvement of the measurement apparatus or manufacturing of a new measurement apparatus that conforms to the new specifications. This can cause operational delays in the production of the object and delays in the delivery of the object as a finished product.

To address these issues, it is an aim of the present disclosure to provide a measurement apparatus that can be easily manufactured by reducing the dependence on the specifications of each installation location of the measurement apparatus.

Embodiments of the present disclosure are mainly described below with reference to the drawings.

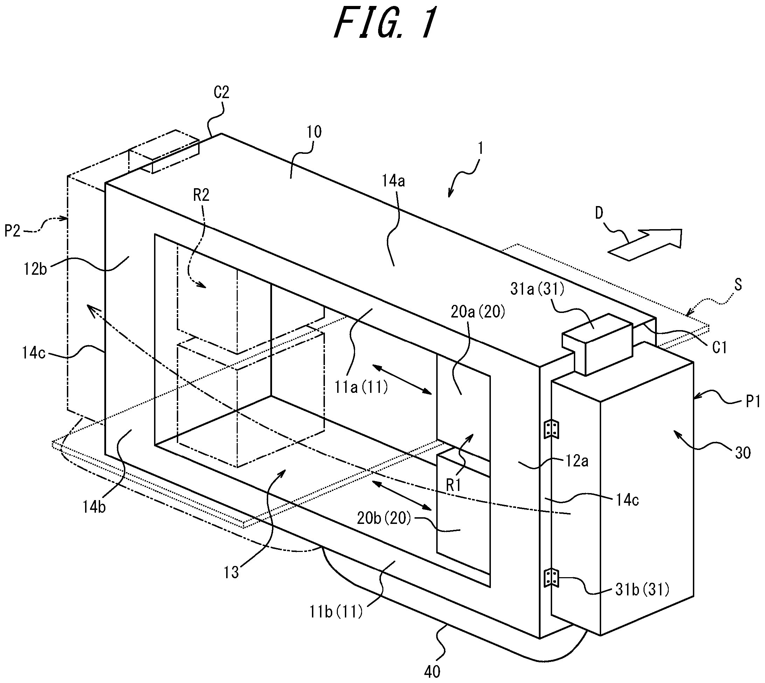

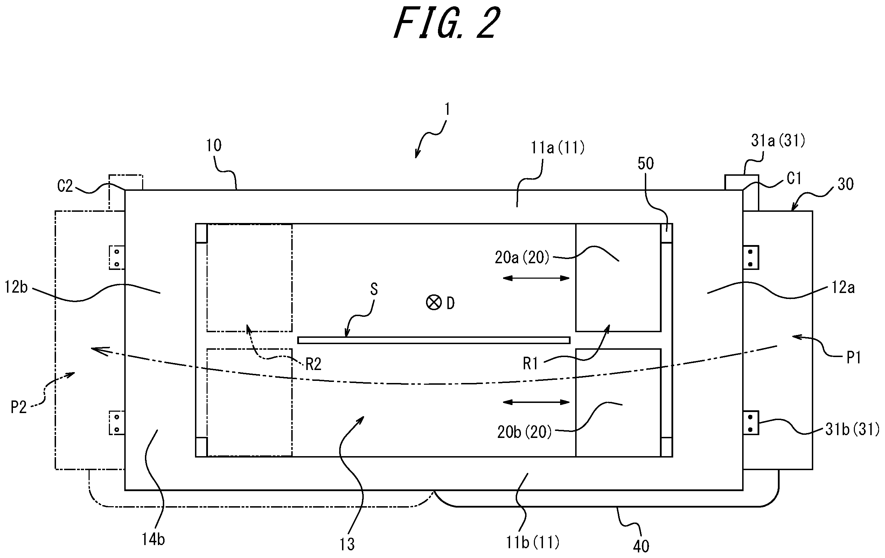

FIG. 1 schematically illustrates the configuration of a measurement apparatus 1 according to an embodiment of the present disclosure. FIG. 2 is a schematic diagram of the measurement apparatus 1 in FIG. 1, viewed from the direction in which an object S is conveyed. In FIGS. 1 and 2, the scale of each component is changed as necessary to make the size of each component recognizable. In FIGS. 1 and 2, the right side of the measurement apparatus 1 is the first position P1 and the left side of the measurement apparatus 1 is the second position P2. In the following, "one side" means, for example, the right side in FIGS. 1 and 2. The "other side" means, for example, the left side in FIGS. 1 and 2. The configuration of the measurement apparatus 1 according to an embodiment is mainly described with reference to FIG. 1 and FIG. 2.

The measurement apparatus 1 measures parameters of the sheet-like object S. In the present disclosure, the "measurement apparatus 1" includes, for example, an online thickness gauge. The "object S" includes, for example, a battery electrode sheet. The "parameters" include, for example, basis weight, coating weight, thickness, and surface position.

The measurement apparatus 1 is, for example, incorporated into a production line for producing the sheet-like object S and measures parameters of the object S, which is continuously manufactured and conveyed in one direction, without stopping the conveyance of the object S. The measurement apparatus 1 includes a support 10, a pair of sensor heads 20, an electrical component unit 30, a cable 40, and pairs of switches 50. Although omitted in the drawings, the measurement apparatus 1 according to one embodiment also includes an operation panel for the worker to input instructions.

In FIGS. 1 and 2, as an example, the appearance when the pair of sensor heads 20, the electrical component unit 30, and the cable 40 are positioned on the first position P1 side is illustrated by solid lines. In contrast, when the pair of sensor heads 20, the electrical component unit 30, and the cable 40 are positioned on the second position P2 side instead of the first position P1 side, the appearance is illustrated by dashed double-dotted lines.

The support 10 is configured so that the longitudinal direction is orthogonal to the conveyance direction D of the object S. The support 10 is symmetrically formed with respect to the object S. More specifically, the support 10 is formed to be vertically and horizontally symmetrical with respect to the object S located in the center of the support 10.

The support 10 supports the pair of sensor heads 20 in a horizontally movable manner. More specifically, the support 10 supports the pair of sensor heads 20 in a horizontally movable manner along the longitudinal direction of the support 10. The support 10 has a pair of beams 11 that respectively supports the pair of sensor heads 20. The support 10 has a first stand 12a connecting ends of the pair of beams 11 on one side. The support 10 has a second stand 12b connecting ends of the pair of beams 11 on the other side.

The first stand 12a and the second stand 12b are each a freestanding support structure and support the beams 11. The first stand 12a is connected to the ends of the pair of beams 11, which are arranged in parallel. The second stand 12b is spaced horizontally apart from the first stand 12a and is connected to the ends of the pair of beams 11 on the other side. The pair of beams 11 are spaced apart vertically and arranged in parallel. The pair of beams 11 has an upper beam 11a disposed on the upper side and a lower beam 11b disposed on the lower side.

The support 10 is an O-shaped O-frame with an opening 13 surrounded by the upper beam 11a, the lower beam 11b, the first stand 12a, and the second stand 12b. The first position P1 is a position on one side of the O-shaped frame in the longitudinal direction. The second position P2 is a position on the other side in the longitudinal direction. The sheet-like object S, which is the target of parameter measurement, is continuously conveyed in one direction from the front side to the rear side of the support 10 through the opening 13.

The support 10 has a top surface 14a of the O-shaped frame, a first side 14b orthogonal to the conveyance direction D of the object S, and second sides 14c orthogonal to the longitudinal direction of the support 10. The support 10 has a first corner C1 where the top surface 14a intersects with the second side 14c on one side of the support, i.e., on the right side. The support 10 has a second corner C2 where the top surface 14a intersects with the second side 14c on another side of the support, i.e., on the left side.

The support 10 has a first evacuation area R1 in which the object S is not present on the first position P1 side of the support 10 and a second evacuation area R2 in which the object S is not present on the second position P2 side of the support 10. The first evacuation area R1 is located at one side of the support 10 in the longitudinal direction, relative to the object S, in the O-shaped frame's interior space surrounded by the upper beam 11a, the lower beam 11b, the first stand 12a, and the second stand 12b. The second evacuation area R2 is located at the other side of the support 10 in the longitudinal direction, relative to the object S, in the interior space. In the first evacuation area R1 and the second evacuation area R2, the object S does not overlap with the pair of sensor heads 20 in the vertical direction.

The pair of sensor heads 20 moves horizontally while separated from and facing each other and scans the object S with the object S positioned between the sensor heads 20. More specifically, the sensor heads 20 are provided in two locations vertically separated from each other, leaving an area through which the object S passes. Each sensor head 20 in the pair is fixed to a non-illustrated moving mechanism and is supported to move horizontally with respect to the beam 11 via the moving mechanism.

The pair of sensor heads 20 moves horizontally along the beam 11 by means of the moving mechanism. An upper sensor head 20a, located on the upper side of the pair of sensor heads 20, is supported by the upper beam 11a via the moving mechanism and moves horizontally along the upper beam 11a by means of the moving mechanism. The lower sensor head 20b, located on the lower side of the pair of sensor heads 20, is supported by the lower beam 11b via the moving mechanism and moves horizontally along the lower beam 11b by means of the moving mechanism.

The pair of sensor heads 20 uses the first evacuation area R1 as the origin area when the electrical component unit 30 is at the first position P1 and uses the second evacuation area R2 as the origin area when the electrical component unit 30 is at the second position P2. The pair of sensor heads 20 use, as the origin area, the evacuation area on the same side as the position of the electrical component unit 30 with respect to the support 10.

When the first evacuation area R1 is the origin area, the pair of sensor heads 20 scans the object S while moving horizontally in the longitudinal direction of the support 10 toward the area on the other side, i.e., the left side, of the support 10 from the first evacuation area R1. When the second evacuation area R2 is the origin area, the pair of sensor heads 20 scans the object S while moving horizontally in the longitudinal direction of the support 10 toward the area on the one side, i.e., the right side, of the support 10 from the second evacuation area R2. The origin area of the pair of sensor heads 20 has the same space with respect to the sheet width of the object S on both sides, i.e., in the first evacuation area R1 and the second evacuation area R2.

One of the upper sensor head 20a and the lower sensor head 20b has a radiation source that emits radiation such as beta rays and X-rays. The other has a detector that detects the radiation emitted from the radiation source and transmitted through the object S. The radiation source and the detector face each other during scanning of the object S by the pair of sensor heads 20. The pair of sensor heads 20 uses radiation to detect parameters of the sheet-like object S. The pair of sensor heads 20 continuously outputs the detection signals of the acquired parameters to the electrical component unit 30 via the cable 40.

The electrical component unit 30 controls measurement of the parameters using the sensor heads 20. The electrical component unit 30 integrally includes a transformer, a power supply, a control device such as a programmable logic controller (PLC), a control board, a driver for driving the moving mechanism that moves the pair of sensor heads 20, a measurement calculator, input/output connections, and the like. The components of the electrical component unit 30 are not directly mounted individually with the support 10 as a housing, but rather are stored in a storage case in the form of a local box, for example, which forms a single mass.

The arrangement of the electrical component unit 30 can be changed between the first position P1 on one side of the support 10 and the second position P2 on the other side of the support 10 according to the installation location of the measurement apparatus 1. The first position P1 and the second position P2 are located on respective sides of the support 10 of the measurement apparatus 1 in the longitudinal direction. More specifically, the first position P1 is a position along the second side 14c on one side of the support 10 in the longitudinal direction. The second position P2 is a position along the second side 14c on the other side of the support 10 in the longitudinal direction. In FIGS. 1 and 2, as an example, the electrical component unit 30 is located at the first position P1 on one side of the support 10. The electrical component unit 30 can be moved from the first position P1 to the second position P2 in a case in which, for example, the installation location of the measurement apparatus 1 is changed, requiring different specifications for the arrangement of the electrical component unit 30.

The electrical component unit 30 has a mounting structure 31 that attaches the electrical component unit 30 to the support 10 at the first position P1 or the second position P2. The mounting structure 31 includes a structure that can be attached to and detached from the support 10 by, for example, screwing, fitting, or engaging. The mounting structure 31 includes a hanger structure 31a so that the electrical component unit 30 as a local box can be easily replaced on the support 10. In addition, the mounting structure 31 includes a screw fastening structure 31b that is screwed to the side of the support 10 via a fixing bracket screwed to the side of the local box.

At the first position P1, for example, the electrical component unit 30 is hooked to the first corner C1 on one side of the support 10 by the hanger structure 31a and secured to the second side 14c on the right side of the support 10 by the screw fastening structure 31b. When moved from the first position P1 to the second position P2, for example, the electrical component unit 30 is hooked to the second corner C2 on the other side of the support 10 by the hanger structure 31a and secured to the second side 14c on the left side of the support 10 by the screw fastening structure 31b.

The electrical component unit 30, such as a control device and a driver, of the measurement apparatus 1 controls the moving mechanism that moves the pair of sensor heads 20 to generate power, and uses the power to move the pair of sensor heads 20 along the pair of beams 11, respectively. The electrical component unit 30 moves the upper sensor head 20a and the lower sensor head 20b in synchronization with each other. The electrical component unit 30 continuously acquires, from the sensor heads 20, the detection signals of the parameters of the object S as outputted by the sensor heads 20 while moving along the beams 11 by means of the moving mechanism.

The electrical component unit 30, such as a measurement calculator, of the measurement apparatus 1 uses the pair of sensor heads 20, which include the upper sensor head 20a and the lower sensor head 20b, to measure the transmission attenuation of radiation by the object S based on the acquired detection signals. The electrical component unit 30 performs similar measurements in advance on a plurality of samples whose parameters are known and calculates a calibration curve. The electrical component unit 30 can calculate the parameters of the object S from the relationship between the transmission attenuation and the pre-calculated calibration curve.

The cable 40 connects the pair of sensor heads 20 and the electrical component unit 30 to each other. In addition, the cable 40 also connects the pairs of switches 50 and the electrical component unit 30 to each other. The cable 40 includes power lines, signal lines, communication lines, and the like. At least a portion of the cable 40 is arranged outside of the support 10. For example, the cable 40 is arranged so that part of the cable 40 is built into the hollow portion of the O-shaped frame constituting the support 10, with the remaining part extending from the center of the lower beam 11b to the outside of the O-shaped frame and connecting to the electrical component unit 30 from the outside.

The arrangement of the cable 40 changes outside the O-shaped frame together with movement of the electrical component unit 30 from the first position P1 to the second position P2. More specifically, when the electrical component unit 30 is at the first position P1, the cable 40 extends from the center of the lower beam 11b toward one side of the support 10 until reaching the electrical component unit 30. Conversely, when the electrical component unit 30 is moved from the first position P1 to the second position P2, the cable 40 extends from the center of the lower beam 11b toward the other side of the support 10 until reaching the electrical component unit 30.

The cable 40 is drawn outside the local box serving as the electrical component unit 30, and has an appropriate amount of slack to allow it to move to the opposite side of the O-shaped frame together with the electrical component unit 30 without having to change the wiring inside the O-shaped frame and the local box. The cable 40 is properly arranged and secured along the O-shaped frame once the electrical component unit 30 has been inverted and secured to the support 10 by the mounting structure 31.

The pairs of switches 50 are mounted on the support 10 respectively at the first position P1 side and second position P2 side of the support 10.

For example, a pair of switches 50 is mounted respectively on both the first position P1 side and the second position P2 side along the upper beam 11a of the support 10. The pair of switches 50 is located respectively outward in the longitudinal direction of the support 10 from the upper sensor head 20a when the upper sensor head 20a is located in the origin area in the first evacuation area R1 and the second evacuation area R2.

For example, a pair of switches 50 is mounted respectively on both the first position P1 side and the second position P2 side along the lower beam 11b of the support 10. The pair of switches 50 is located respectively outward in the longitudinal direction of the support 10 from the lower sensor head 20b when the lower sensor head 20b is located in the origin area in the first evacuation area R1 and the second evacuation area R2.

The switches 50 include, for example, limit switches. The pairs of switches 50 are controlled by the electrical component unit 30 and switch between a function of defining the origin of the sensor heads 20 and a function of restricting movement of the sensor heads 20 according to the arrangement of the electrical component unit 30.

For example, when the electrical component unit 30 is in the first position P1, the switch 50 mounted on the first position P1 side along the upper beam 11a defines the origin of the upper sensor head 20a. The switch 50 mounted on the second position P2 side along the upper beam 11a restricts the movement of the upper sensor head 20a so that the upper sensor head 20a does not move excessively toward the other side of the support 10. When the electrical component unit 30 is moved from the first position P1 to the second position P2, the functions are switched between the switch 50 mounted on the first position P1 side along the upper beam 11a and the switch 50 mounted on the second position P2 side along the upper beam 11a.

For example, when the electrical component unit 30 is in the first position P1, the switch 50 mounted on the first position P1 side along the lower beam 11b defines the origin of the lower sensor head 20b. The switch 50 mounted on the second position P2 side along the lower beam 11b restricts the movement of the lower sensor head 20b so that the lower sensor head 20b does not move excessively toward the other side of the support 10. When the electrical component unit 30 is moved from the first position P1 to the second position P2, the functions are switched between the switch 50 mounted on the first position P1 side along the lower beam 11b and the switch 50 mounted on the second position P2 side along the lower beam 11b.

In the measurement apparatus 1 as described above, the installation position of the local box serving as the electrical component unit 30 is generally on the back side, which is the apparatus maintenance side, depending on the installation conditions of the measurement apparatus 1 on the production line. For example, when the measurement apparatus 1 is placed on the production line L1 as an online thickness gauge M2 in FIG. 3, the electrical component unit 30 is located on the opposite side from the aisle. In terms of FIGS. 1 and 2, the electrical component unit 30 is in the second position P2. For example, when the measurement apparatus 1 is placed on the production line L2 as an online thickness gauge M2 in FIG. 3, the electrical component unit 30 is also similarly located on the opposite side from the aisle. In terms of FIGS. 1 and 2, the electrical component unit 30 is in the first position P1. This configuration is not limiting, however, and the installation position of the local box serving as the electrical component unit 30 may be freely determined according to factors such as the needs of the worker with respect to the production line.

It is also customary to set the evacuation area of the pair of sensor heads 20 on the maintenance side of the apparatus, to set the evacuation area as the origin area, and to have the scanning by the pair of sensor heads 20 start from the origin area. For example, when the measurement apparatus 1 is placed on the production line L1 as an online thickness gauge M2 in FIG. 3, the evacuation area of the pair of sensor heads 20 is located on the opposite side from the aisle. In terms of FIGS. 1 and 2, the evacuation area of the pair of sensor heads 20 corresponds to the second evacuation area R2. For example, when the measurement apparatus 1 is placed on the production line L2 as an online thickness gauge M2 in FIG. 3, the evacuation area of the pair of sensor heads 20 is also similarly located on the opposite side from the aisle. In terms of FIGS. 1 and 2, the evacuation area of the pair of sensor heads 20 corresponds to the first evacuation area R1.

This configuration is not limiting, however, and the evacuation area of the pair of sensor heads 20 may be freely determined according to factors such as the needs of the worker with respect to the production line. The origin area may be aligned with other apparatuses on the production line by software processing using the electrical component unit 30.

According to the measurement apparatus 1 in the above embodiment, the measurement apparatus 1 can be easily manufactured by reducing the dependence on the specifications of each installation location of the measurement apparatus 1. The arrangement of the electrical component unit 30 can be changed between the first position P1 and the second position P2 according to the installation location of the measurement apparatus 1, thus making it possible always to manufacture the same model of measurement apparatus 1 during manufacturing of the measurement apparatus 1. The same model of measurement apparatus 1 can be manufactured and shipped, and the appropriate position between the first position P1 and the second position P2 can be selected and the electrical component unit 30 arranged according to the installation location at the production plant where the object S is produced.

The local box serving as the electrical component unit 30 can be easily moved, thereby suppressing the occurrence of major problems such as the inability to install the measurement apparatus 1 on the production line after manufacturing due to specification errors or reversed positions, as occurs with conventional technology. When an order for manufacturing of the measurement apparatus 1 is received, this configuration reduces the need to clarify the specifications for each installation location on the production line before starting to manufacture the measurement apparatus 1, thus making it possible to start manufacturing the measurement apparatus 1 before the specifications are clarified. This provides more time to deliver the measurement apparatus 1, and the productivity of the measurement apparatus 1 is improved.

The ability to plan production of the measurement apparatus 1 as described above also makes it easy to manufacture the measurement apparatus 1 and hold it in inventory before the specifications are clearly defined. Therefore, fluctuations in the manufacturing load in response to the physical load are suppressed. As a result, the manufacturing efficiency of the measurement apparatus 1 is improved. For example, even for large orders with lot numbers exceeding 100 units, it is possible to demonstrate superior delivery time over competitors through make-to-stock production and other means.

The measurement apparatus 1 does not require the manufacture of a large number of components with reversed positions, and the assembly method is the same, which improves the work efficiency of assembly. Assembly errors in the assembly work of the measurement apparatus 1 are also suppressed. In addition, sudden changes or the like occurring in the installation specifications of the measurement apparatus 1 in the production line for producing the object S can be handled by simply changing the arrangement of the electrical component unit 30 and the like on the production line. Therefore, operational delays in the production of the object S and delays in the delivery of the object S as a finished product can be suppressed.

The electrical component unit 30 can be stably and easily secured to the support 10 at the first position P1 or the second position P2 by virtue of the electrical component unit 30 having the mounting structure 31 that attaches the electrical component unit 30 to the support 10 at the first position P1 or the second position P2.

The provision of the first evacuation area R1 and the second evacuation area R2 in the support 10 enables symmetrical formation of the components of the measurement apparatus 1, including the support 10 and the pair of sensor heads 20. As described above, it is thereby possible always to manufacture the same model of measurement apparatus 1 during manufacturing of the measurement apparatus 1, without having to consider whether the positions are reversed, and to operate the measurement apparatus 1 symmetrically according to the installation location of the production line.

By the pair of sensor heads 20 using the evacuation area on the same side of the electrical component unit 30 as the origin area, it is easier to set the origin area of the pair of sensor heads 20 and the electrical component unit 30 together on the back side, which is the equipment maintenance side, in accordance with conventional practice.

The pair of switches 50 switches between a function of defining the origin of the sensor heads 20 and a function of restricting movement of the sensor heads 20 according to the arrangement of the electrical component unit 30. As described above, it is thereby possible always to manufacture the same model of measurement apparatus 1 during manufacturing of the measurement apparatus 1, without having to consider whether the positions are reversed, and to operate the measurement apparatus 1 symmetrically according to the installation location of the production line.

At least a portion of the cable 40 connecting the pair of sensor heads 20 and the electrical component unit 30 to each other is arranged outside of the support 10. The cable 40 can thereby be appropriately routed along the support 10 in response to movement of the electrical component unit 30 from one of the first position P1 and the second position P2 to the other.

The support 10 is an O-shaped frame having the pair of beams 11, the first stand 12a connecting ends of the pair of beams 11 on one side, and the second stand 12b connecting ends of the pair of beams 11 on the other side. This improves the robustness of the support 10.

By the first position P1 being on one side of the O-shaped frame in the longitudinal direction and the second position P2 being on the other side in the longitudinal direction, the electrical component unit 30 and the evacuation area of the pair of sensor heads 20 can be arranged in a direction orthogonal to the conveyance direction D of the object S, in accordance with conventional practice.

By the object S including a battery electrode sheet, the measurement apparatus 1 can measure a parameter on a production line for producing battery electrode sheets, with a battery electrode sheet as the object of measurement.

By the parameter including the basis weight of the object S, the measurement apparatus 1 can measure the basis weight of the sheet-like object on a production line for producing the sheet-like object.

The fact that the support 10 serving as an O-shaped frame and the electrical component unit 30 serving as a local box are configured separately from each other makes it possible to separate the corresponding manufacturing processes. This facilitates the mass production of the measurement apparatus 1. For example, individually mounting an electrical device, control device, communication device, and the like in the hollow space of the O-shaped frame before performing wiring, piping, testing, and the like would lead to a bottleneck in the production volume during mass production, whereas the measurement apparatus 1 can prevent such bottlenecks.

The configuration of the electrical component unit 30 as a local box also enables interchangeability among a plurality of electrical component units 30. In this case, for example, if trouble occurs in the electrical component unit 30 or the like and quick restoration is required, restoration can be accomplished simply by preparing and replacing with another electrical component unit 30. In addition, inspection, management, and the like of the replaced electrical component unit 30 make it easier to isolate the problem that caused the trouble.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are considered to be included therein.

For example, the shape, size, arrangement, orientation, and number of the above-described components are not limited to the above explanation or the drawings. The shape, size, arrangement, orientation, and number of each component may be selected freely as long as the functions of the component can be achieved. The constituent elements of the measurement apparatus 1 in the drawings are illustrated as functional concepts. The specific form of each constituent element is not limited to the form in the drawings.

In the above embodiment, the electrical component unit 30 has been described as having the mounting structure 31 that attaches the electrical component unit 30 to the support 10 at the first position P1 or the second position P2, but this configuration is not limiting. The electrical component unit 30 need not have such a mounting structure 31. In this case, the electrical component unit 30 may be positioned at a distance from the support 10 at the first position P1 or the second position P2.

In the above embodiment, the support 10 has been described as having the first evacuation area R1 in which the object S is not present on the first position P1 side of the support 10 and the second evacuation area R2 in which the object S is not present on the second position P2 side of the support 10, but this configuration is not limiting. The support 10 may instead have only one of the first evacuation area R1 and the second evacuation area R2.

In the above embodiment, the pair of sensor heads 20 has been described as using the first evacuation area R1 as the origin area when the electrical component unit 30 is at the first position P1 and using the second evacuation area R2 as the origin area when the electrical component unit 30 is at the second position P2, but this configuration is not limiting. The pair of sensor heads 20 may use, as the origin area, the evacuation area on the opposite side from the position of the electrical component unit 30 with respect to the support 10. The pair of sensor heads 20 may fix either the first evacuation area R1 or the second evacuation area R2 as the evacuation area, without changing the evacuation area from one of the first evacuation area R1 and the second evacuation area R2 to the other according to movement of the electrical component unit 30.

In the above embodiment, the pair of switches 50 has been described as switching between a function of defining the origin of the sensor heads 20 and a function of restricting movement of the sensor heads 20 according to the arrangement of the electrical component unit 30, but this configuration is not limiting. For example, in a case in which the evacuation area of the pair of sensor heads 20 is fixed regardless of the movement of the electrical component unit 30, the pair of switches 50 need not switch between the functions of defining the origin and regulating the movement of the sensor heads 20 according to the arrangement of the electrical component unit 30.

In the above embodiment, the measurement apparatus 1 has been described as including the cable 40, but this configuration is not limiting. Instead of the measurement apparatus 1 including the cable 40, the pair of sensor heads 20 and the electrical component unit 30 may be communicably connected by wireless communication, for example. The cable 40 has been described as extending from the center of the lower beam 11b to the outside of the O-shaped frame, but this configuration is not limiting. Instead of extending from the lower beam 11b, the cable 40 may extend from any of the upper beam 11a, the first stand 12a, and the second stand 12b to the outside of the O-shaped frame.

In the above embodiment, the support 10 has been described as an O-shaped frame, but this configuration is not limiting. The support 10 may be formed by a frame structure and an enclosure structure of any shape that enables the pair of sensor heads 20 to move horizontally and scan the object S. Alternatively, the support 10 may be formed as a box structure that covers the entirety of the opening 13 except for the area through which the object S passes in the opening 13.

In the above embodiment, the first position P1 on one side of the support 10 has been described as a position along the second side 14c on one side in the longitudinal direction in the support 10, but this configuration is not limiting. The first position P1 on one side of the support 10 may be a position along a portion of the first side 14b of the support 10 on one side in the longitudinal direction. The second position P2 on the other side of the support 10 has been described as a position along the second side 14c on the other side in the longitudinal direction in the support 10, but this configuration is not limiting. The second position P2 on the other side of the support 10 may be a position along a portion of the first side 14b of the support 10 on the other side in the longitudinal direction.

In the above embodiment, the first position P1 has been described as a position on one side of the O-shaped frame in the longitudinal direction and the second position P2 as a position on the other side in the longitudinal direction, but this configuration is not limiting. For example, the first position P1 may be a position on one side of the O-shaped frame in the transverse direction, and the second position P2 may be a position on the other side in the transverse direction.

In the above embodiment, the object S has been described as including a battery electrode sheet, but this configuration is not limiting. The object S may include any other product produced in sheet form on a production line.

In the above embodiment, the measurement apparatus 1 has been described as including an online thickness gauge arranged on a production line, but this configuration is not limiting. The measurement apparatus 1 may include any other relatively small or medium-sized apparatus that could conventionally have reversed positions on a production line. Medium-sized apparatuses include, for example, apparatuses of a size such that a single unit constituting the apparatus can be moved by about two workers.

**In** addition to the description in the above embodiment, the storage case for the electrical component unit 30 having a local box structure may be provided with the features corresponding to the specifications, such as being dustproof or water resistant, or having EMC (Electromagnetic Compatibility), by appropriately selecting features.

In addition to the description in the above embodiment, the electrical component unit 30 may also have air instruments for controlling air, in a case in which air is used in the support 10 or the like, included integrally in the local box. In this case, an air tube or the like for blowing air may be arranged like the cable 40 along the support 10 in the measurement apparatus 1.

Some embodiments of the present disclosure are exemplified below. It should be noted that the embodiments of the present disclosure are not, however, limited to these examples.
[Appendix 1] A measurement apparatus for measuring a parameter of a sheet-like object, the measurement apparatus comprising:
   a pair of sensor heads configured to move horizontally while separated from and facing each other and to scan the object with the object positioned between the sensor heads;
   a support configured to support the pair of sensor heads in a horizontally movable manner; and
   an electrical component unit configured to control measurement of the parameter using the sensor heads, wherein
   an arrangement of the electrical component unit can be changed between a first position on one side of the support and a second position on another side of the support according to an installation location of the measurement apparatus.
[Appendix 2] The measurement apparatus according to appendix 1, wherein the electrical component unit includes a mounting structure configured to attach the electrical component unit to the support at the first position or the second position.
[Appendix 3] The measurement apparatus according to appendix 1 or 2, wherein the support includes a first evacuation area in which the object is not present on the first position side of the support and a second evacuation area in which the object is not present on the second position side of the support.
[Appendix 4] The measurement apparatus according to appendix 3, wherein the pair of sensor heads uses the first evacuation area as an origin area when the electrical component unit is at the first position and uses the second evacuation area as the origin area when the electrical component unit is at the second position.
[Appendix 5] The measurement apparatus according to appendix 4, further comprising a pair of switches mounted on the support respectively on the first position side and the second position side of the support and configured to switch between a function of defining an origin of the sensor heads and a function of restricting movement of the sensor heads according to the arrangement of the electrical component unit.
[Appendix 6] The measurement apparatus according to any one of appendices 1 to 5, further comprising a cable connecting the pair of sensor heads and the electrical component unit to each other, at least a portion of the cable being arranged outside of the support.
[Appendix 7] The measurement apparatus according to any one of appendices 1 to 6, wherein the support is an O-shaped frame including a pair of beams respectively supporting the pair of sensor heads, a first stand connecting ends of the pair of beams on one side, and a second stand connecting ends of the pair of beams on another side.
[Appendix 8] The measurement apparatus according to appendix 7, wherein
   the first position is a position on one side of the O-shaped frame in a longitudinal direction, and
   the second position is a position on another side of the O-shaped frame in the longitudinal direction.
[Appendix 9] The measurement apparatus according to any one of appendices 1 to 8, wherein the object includes a battery electrode sheet.
[Appendix 10] The measurement apparatus according to any one of appendices 1 to 9, wherein the parameter includes a basis weight of the object.

### REFERENCE SIGNS LIST

- 1: Measurement apparatus
- 10: Support
- 11: Beam
- 11a: Upper beam
- 11b: Lower beam
- 12a: First stand
- 12b: Second stand
- 13: Opening
- 14a: Upper surface
- 14b: First side surface
- 14c: Second side surface
- 20: Sensor head
- 20a: Upper sensor head
- 20b: Lower sensor head
- 30: Electrical component unit
- 31: Mounting structure
- 31a: Hanger structure
- 31b: Screw fixing structure
- 40: Cable
- 50: Switch
- C1: First corner
- C2: Second corner
- D: Conveyance direction
- L1: Production line
- L2: Production line
- M1: Apparatus
- M2: Online thickness gauge
- M3: Apparatus
- P1: First position
- P2: Second position
- R1: First evacuation area
- R2: Second evacuation area
- S: Object

## Claims

1. A measurement apparatus for measuring a parameter of a sheet-like object, the measurement apparatus comprising:
a pair of sensor heads configured to move horizontally while separated from and facing each other and to scan the object with the object positioned between the sensor heads;
a support configured to support the pair of sensor heads in a horizontally movable manner; and
an electrical component unit configured to control measurement of the parameter using the sensor heads, wherein
an arrangement of the electrical component unit can be changed between a first position on one side of the support and a second position on another side of the support according to an installation location of the measurement apparatus.

2. The measurement apparatus according to claim 1, wherein the electrical component unit includes a mounting structure configured to attach the electrical component unit to the support at the first position or the second position.

3. The measurement apparatus according to claim 1 or 2, wherein the support includes a first evacuation area in which the object is not present on the first position side of the support and a second evacuation area in which the object is not present on the second position side of the support.

4. The measurement apparatus according to claim 3, wherein the pair of sensor heads uses the first evacuation area as an origin area when the electrical component unit is at the first position and uses the second evacuation area as the origin area when the electrical component unit is at the second position.

5. The measurement apparatus according to claim 4, further comprising a pair of switches mounted on the support respectively on the first position side and the second position side of the support and configured to switch between a function of defining an origin of the sensor heads and a function of restricting movement of the sensor heads according to the arrangement of the electrical component unit.

6. The measurement apparatus according to claim 1 or 2, further comprising a cable connecting the pair of sensor heads and the electrical component unit to each other, at least a portion of the cable being arranged outside of the support.

7. The measurement apparatus according to claim 1 or 2, wherein the support is an O-shaped frame including a pair of beams respectively supporting the pair of sensor heads, a first stand connecting ends of the pair of beams on one side, and a second stand connecting ends of the pair of beams on another side.

8. The measurement apparatus according to claim 7, wherein
the first position is a position on one side of the O-shaped frame in a longitudinal direction, and
the second position is a position on another side of the O-shaped frame in the longitudinal direction.

9. The measurement apparatus according to claim 1 or 2, wherein the object includes a battery electrode sheet.

10. The measurement apparatus according to claim 1 or 2, wherein the parameter includes a basis weight of the object.
